# EUROPÄISCHE PATENTSCHRIFT

(11) **EP 0 602 062 B1**
(45) Veröffentlichungstag und Bekanntmachung des Hinweises auf die Patenterteilung: **24.05.1995**
(21) Anmeldenummer: 92916953.0
(22) Anmeldetag: 17.08.1992
(51) Int. Cl.: B01D 19/00, B01D 35/01

(54) **VERFAHREN ZUM ABTRENNEN VON GASFÖRMIGEN BESTANDTEILEN AUS FLIESSFÄHIGEN MEDIEN SOWIE VORRICHTUNG UND ANLAGE DAFÜR**
PROCESS FOR SEPARATING GASEOUS COMPONENTS FROM POURABLE MEDIA AND DEVICE AND INSTALLATION THEREFOR
PROCEDE POUR LA SEPARATION DE CONSTITUANTS GAZEUX DE MILIEUX COULANTS AINSI QUE DISPOSITIF ET INSTALLATION CORRESPONDANTS

(30) Priorität: 06.09.1991 AT 1772/91
(43) Veröffentlichungstag der Anmeldung: 22.06.1994
(73) Patentinhaber: Andritz-Patentverwaltungs-Gesellschaft m.b.H., 8045 Graz (AT)
(72) Erfinder: SCHNUR, Gerald, A-8045 Graz (AT)
(74) Vertreter: Schweinzer, Friedrich
(86) Internationale Anmeldenummer: AT9200113
(87) Internationale Veröffentlichungsnummer: WO9304757

(56) Entgegenhaltungen:
- AT-B- 392 216
- US-A- 4 326 863
- US-A- 4 410 337
- US-A- 4 414 006

## Beschreibung

Die Erfindung betrifft ein Verfahren, eine Vorrichtung und eine Anlage unter Verwendung dieser Vorrichtung zum Abtrennen von gasförmigen Bestandteilen aus fließfähigen Medien, insbesondere Feststoffsuspensionen.

Bisher bekannte Verfahren und Vorrichtungen zur Ausscheidung von Gasen aus Flüssigkeiten, Suspensionen und Flüssigkeits-Material-Gas-Mischungen arbeiten nach dem Prinzip einer Zentrifuge. Dabei muß das Medium, das aus dem Gas ausgeschieden werden soll, in Rotation versetzt werden, wobei sich aufgrund größerer Fliehkräfte die schwereren Bestandteile auf größeren Radien, die Gase und flüchtigeren Bestandteile hauptsächlich auf kleineren Radien bzw. im Rotationszentrum anreichern. Das auf kleineren Radien angesammelte Gas wird dann über eine entsprechende Kanalführung aus dem System abgeführt. Meist wird für die Gasabfuhr Unterdruck am Absaugsystem angelegt.

Derartige Zentrifugalsysteme sind in der AT-PS 392 216 der Anmelderin, der US-PS 4 326 863 und der US-PS 4 410 337 beschrieben und arbeiten mit einem zentralen Rotor, der parallel zu seiner Achse verlaufende, meist rechteckige und ebene Schaufeln oder Leisten zum Energieeintrag trägt. Gemäß der AT-PS 392 216 ist ein Käfigrotor und ein etwa zentrales,axiales Gasabführrohr nach oben vorgesehen. Gemäß der US-PS 4 326 863 wird das Gas durch den hohlen, radiale Durchbrüche aufweisenden Rotor selbst nach oben abgeleitet und gemäß der US-PS 4 410 337 durch den hohlen Rotor nach unten, wobei der radiale Durchgänge aufweisende Rotor unten von einer Scheibe begrenzt wird, von der aus die Rippen nach oben verlaufen und die mit dem Hohlraum des Rotors korrespondierende Durchgänge zur Gasableitung aufweist.

Ein Nachteil derartiger Systeme besteht darin, daß zur Drallerzeugung Energie in das Medium eingebracht werden muß, die im weiteren Prozeßablauf ganz oder teilweise verlorengeht.

Ein weiterer Nachteil besteht darin, daß oft eine komplizierte Regelung notwendig ist, um zu verhindern, daß zwar eine große Menge an Gas, insbesondere Luft, jedoch keine sonstigen Bestandteile augeschieden werden. Dies trifft vor allem dann zu, wenn während des Betriebes schwankende Gasmengen im zu entgasenden Medium auftreten.

Weiters ist bei den bisherigen Systemen nachteilig, daß zum effizienten Betrieb zusätzliche Vorrichtungen notwendig sind, mit denen eine Stabilisierung der trombenartigen Gasausscheidung bezweckt wird.

Bei Medien bzw. Flüssigkeits-Material-Gas-Mischungen wie z.B. den in der Papier- und Zellstoffindustrie vorkommenden Faserstoffsuspensionen haften die gasförmigen Bestandteile (meist Luft) gut im Fasernetzverband, wodurch die Entmischung von gasförmigen und nicht gasförmigen Bestandteilen (Wasser, Fasern etc.) erschwert wird. In diesen Fällen kommt es vor allem darauf an, die Weglänge möglichst kurz zu halten, die das Gas im Medium zurücklegen muß, um die Zone zu erreichen, aus der es abgeführt werden kann. Bei den bekannten Verfahren wirkt sich das in der Weise aus, daß wegen der großen Weglängen entsprechend lange Verweilzeiten des Mediums im Zentrifugenbereich erforderlich sind und somit die Durchsatzmenge des Mediums stark eingeschränkt oder die Zentrifuge sehr lang wird.

Ein weiterer Nachteil der bekannten Verfahren und Vorrichtungen besteht darin, daß zur Verhinderung des Mitausscheidens von nicht gasförmigen Bestandteilen Vorrichtungen vorgesehen werden müssen, die die Aufgabe eines Siebs haben. Speziell bei Medien, die zum Verklumpen neigen, wie z.B. die in der Papier- und Zellstoffindustrie vorherrschenden Faserstoffsuspensionen, können die mit dem abgeführten Gas mitgerissenen Bestandteile zu Verstopfungen führen. Um dies zu verhindern sind Spüleinrichtungen notwendig.

Die vorliegende Erfindung vermeidet oben angeführte Nachteile. Es wird dazu ein Verfahren vorgeschlagen, das dadurch gekennzeichnet ist, daß durch Relativbewegung zwischen den Medien und
einem in diesen Medien angeordneten Körper, insbesondere Rotationskörper, infolge seines Profils Unterdruckzonen gebildet werden, und daß das sich in diesen Unterdruckzonen ansammelnde Gas über das Körperinnere abgeführt wird.

Um die Abtrennung von gasförmigen Bestandteilen aus dem Medium zu unterstützen wird die Fliehkraftwirkung ausgenützt. Vorteilhaft wird erfindungsgemäß das zusammen mit angesammeltem Gas in das Körperinnere eintretende an Gas angereicherte Medium im Körperinneren einer weiteren Entgasung durch Fliehkraftwirkung unterworfen.

Zweckmäßig wird das im Körperinneren entgaste Medium in das den Körper umgebende Medium rückgeführt.

Die Relativbewegung zwischen dem Körper und dem Medium kann durch Bewegung des Körpers oder des Mediums, aber auch durch gleichzeitige Bewegung von Körper und Medium erzeugt werden.

Vorteilhaft wird erfindungsgemäß die Relativbewegung durch, vorzugsweise kontinuierliches Drehen des Körpers erzeugt.

Zweckmäßig wird erfindungsgemäß die Relativbewegung durch, vorzugsweise kontinuierliches Drehen des Körpers und Bewegen, vorzugsweise zur Förderung, des Mediums erzeugt.

Bei industriellen Prozessen sind sehr häufig Medien mit Schwankungen in der Zusammensetzung, z.B. infolge sich ändernder Druck- und Temperaturbedingungen, einer Behandlung zu unterwerfen. Um die Abtrennung von Gas aus Medium mit sich ändernder Zusammensetzung zu optimieren, wird erfindungsgemäß die Relativgeschwindigkeit durch Veränderung der Bewegungsgeschwindigkeit des Körpers und/oder des Mediums eingestellt, insbesondere in Abhängigkeit von den Zustandsgrößen des zu entgasenden Mediums.

Zweckmäßig wird erfindungsgemäß die Strömungsrichtung von Gas im Körperinneren durch Umlenken verändert.

Um die Abtrennung von Gas aus dem Medium zu unterstützen wird Unterdruck angewendet. Vorteilhaft wird erfindungsgemäß das vom Medium abgetrennte Gas unter Anwendung von Unterdruck aus dem Körperinneren abgeleitet.

Zweckmäßig wird erfindungsgemäß der angewendete Unterdruck in Abhängigkeit von den Zustandsgrößen des zu entgasenden Mediums eingestellt.

Die Erfindung betrifft auch eine Vorrichtung zum Abtrennen von gasförmigen Bestandteilen aus fließfähigen Medien, insbesondere zur Durchführung des Verfahrens gemäß vorliegender Anmeldung.

Die Erfindung ist vor allem dadurch gekennzeichnet, daß die Vorrichtung zur Erzeugung einer Relativbewegung zwischen den Medien und
einem in diesen Medien angeordneten Körper eingerichtet ist, der insbesondere rotierbar vorgesehen ist und ein Profil aufweist, das bei dieser Relativbewegung Unterdruckzonen an der Körperoberfläche hervorruft und der Körper im Bereich der Unterdruckzonen mindestens einen Einlaß aufweist, der mit einer im Körperinneren verlaufenden Gasabführung zum Abtransport von abgetrenntem Gas verbunden ist sowie die Gasabführung mindestens einen den Körper durchsetzenden und im Bereich des äußeren Radialumfanges offenen Kanal aufweist.

Gemäß einer vorteilhaften Ausgestaltung der Erfindung ist der Körper als Drehkörper ausgebildet.

Zweckmäßig mündet erfindungsgemäß der im Bereich des äußeren Radialumfanges offene Kanal, vorzugsweise im Bereich des äußeren Radialumfanges, in einen erweiterten Hohlraum.

Vorteilhaft ist erfindungsgemäß der im Bereich des äußeren Radialumfanges offene Kanal, gegebenenfalls über den erweiterten Hohlraum, mit einem weiteren Kanal verbunden.

Zweckmäßig weist erfindungsgemäß der Körper mehrere Arme auf. Vorteilhaft sind erfindungsgemäß mehrere Arme in einer Ebene angeordnet.

Gemäß vorliegender Erfindung kann es auch zweckmäßig sein, wenn die Arme in mindestens zwei Ebenen in bezug auf die Rotationsachse, vorzugsweise übereinander, angeordnet sind.

Zweckmäßig mündet erfindungsgemäß die Gasabführung in einen Sammelkanal.

Gemäß einer vorteilhaften Ausgestaltung der Erfindung ist die Gasabführung, vorzugsweise über den Sammelkanal, mit einer Gasentfernungsvorrichtung, insbesondere Absaugvorrichtung verbunden.

Um die Gasableitung aus dem Medium zu unterstützen, wird der entsprechend ausgebildete Körper bewegt. Gemaß einer vorteilhaften Ausgestaltung der Erfindung ist der Körper bzw. die Arme mit einer Antriebsvorrichtung, insbesondere Antriebswelle verbungen.

Zweckmäßig ist erfindungsgemäß der Sammelkanal in der Antriebswelle angeordnet. Vorteilhaft ist erfindungsgemäß der Sammelkanal zwischen Nabe und Welle angeordnet.

Die Ausbildung der Eintrittsöffnung am Körper hat einen großen Einfluß auf die Effizienz der Gasabtrennung aus dem Medium. Zweckmäßig ist erfindungsgemäß mindestens ein Einlaß kreisförmig ausgebildet. Vorteilhaft ist mindestens ein solcher Einlaß als Bohrung ausgebildet.

Zweckmäßig sind gemäß vorliegender Erfindung mehrere solcher Bohrungen mindestens im wesentlichen in radialer Richtung nebeneinander am Körper angeordnet.

Es ist auch vorteilhaft gemäß vorliegender Erfindung, wenn mehrere solcher Bohrungen mindestens im wesentlichen parallel zur Rotationsachse nebeneinander am Körper angeordnet sind.

Gemäß einer vorteilhaften Ausgestaltung der Erfingung ist mindestens ein Einlaß schlitzförmig ausgebildet. Zweckmäßig ist der mindestens eine schlitzförmige Einlaß in radialer Richtung ausgerichtet.

Vorteilhaft weist erfindungsgemäß der mindestens eine Einlaß einen sich in Richtung zum Körperinneren, vorzugsweise kontinuierlich, erweiternden Querschnitt auf.

Gemäß einer vorteilhaften Ausgestaltung der Erfindung ist im Bereich des äußeren Radialumfanges mindestens ein zusätzliches Profil mit mindestens im wesentlichen zur Rotationsachse paralleler Ausrichtung vorgesehen.

Die Erfindung betrifft auch eine Anlage unter Verwendung der vorstehend beschriebenen Vorrichtung zum Abtrennen von gasförmigen Bestandteilen aus fließfähigen Medien, insbesondere Feststoffsuspensionen. Zweckmäßig ist erfindungsgemäß die Vorrichtung in einem Gehäuse angeordnet. Gemäß einer anderen vorteilhaften Ausgestaltung der Erfindung ist die Vorrichtung in einem Kanal, insbesondere Rohr, Rohrbogen bzw. Rohrkrümmer, angeordnet.

Zweckmäßig ist erfindungsgemäß die Vorrichtung schräg im Gehäuse bzw. Kanal angeordnet.

Vorteilhaft ist erfindungsgemäß die Vorrichtung exzentrisch im Gehäuse bzw. Kanal angeordnet.

Gemäß einer vorteilhaften Ausgestaltung der Erfindung ist der Vorrichtung ein Behälter vorgeschaltet und ragt die Vorrichtung mindestens teilweise aus dem Gehäuse bzw. Kanal in den Behälter hinein.

Zweckmäßig ist erfindungsgemäß die Vorrichtung einer Pumpe vorgeschaltet.

Vorteilhaft ist gemäß vorliegender Erfindung die Vorrichtung mit der Welle der Pumpe direkt verbunden. Gemäß einer vorteilhaften Ausgestaltung der Erfindung ist die Vorrichtung als Pumpenlaufradschaufel ausgebildet.

Die Erfindung wird nun anhand der Ausführungsbeispiele in den Zeichnungen beschrieben, wobei
Fig.1 eine Seitenansicht einer erfindungsgemäßen Vorrichtung,
Fig.2 eine Draufsicht in Richtung B gemäß Fig.1,
Fig.2a eine Draufsicht auf eine weitere erfindungsgemäße Vorrichtung,
Fig.3 den Schnitt A-A gemäß Fig.1 sowie Strömungslinien des Mediums,
Fig.3a und 4a eine Draufsicht auf eine erfindungsgemäße Vorrichtung mit entsprechenden Strömungslinien,
Fig.4b bis Fig.11 Seitenansichten verschiedenster Varianten der Art und des Anbringungsortes der Absaugöffnungen,
Fig.12 eine Seitenansicht einer Variante der Erfindung mit zusätzlichen Elementen zur Erzeugung einer Zentrifugalwirkung,
Fig.13 bis Fig.15 Seitenansichten von Varianten des Einbaus der Vorrichtung in eine Anlage,
Fig.16 und Fig.17 Vertikalschnitte von Varianten der Vorrichtung direkt mit einer Pumpenwelle verbunden,
Fig.18 und Fig.19 Seitenansichten von Varianten für die Vorschaltung der Erfindung vor eine Pumpe,
Fig.20 eine Seitenansicht einer Variante für eine diskontinuierliche Anwendung der Vorrichtung,
Fig.21 eine Seitenansicht einer Integration der Vorrichtung in eine Pumpenlaufradschaufel und
Fig.22 den Schnitt C-C gemäß Fig.21 darstellen.

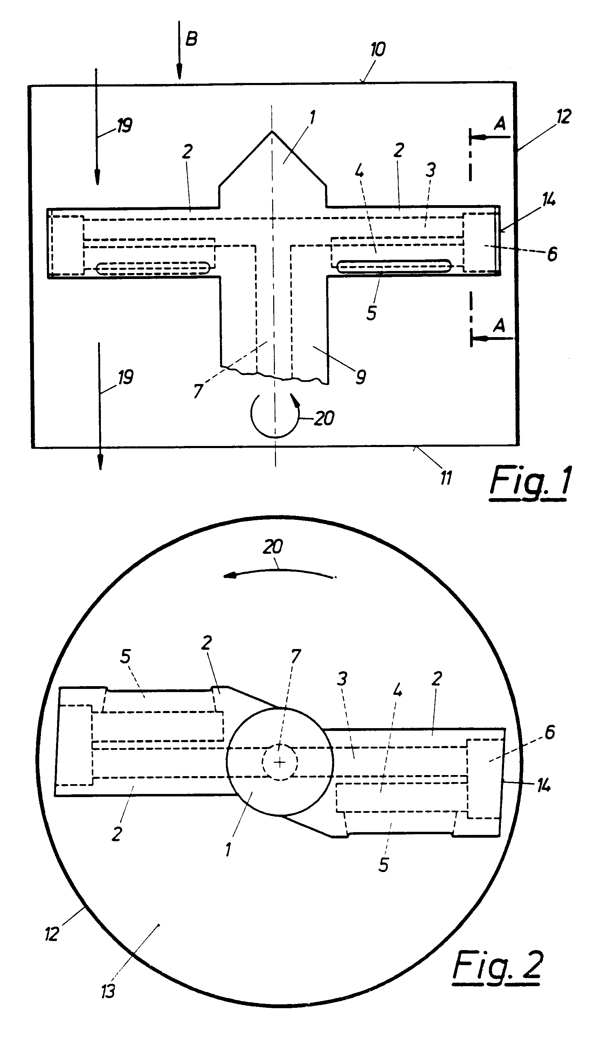

Fig. 1 zeigt eine Seitenansicht einer erfindungsgemäßen Vorrichtung, die im wesentlichen aus einem Körper 1 mit sich radial nach außen erstreckenden Armen 2 besteht, die jeweils mit Kanälen 3 und 4, einem Einlaß 5 sowie einem Hohlraum 6, der nach außen hin offen ist, ausgestattet sind, sodaß eine Verbindung zum Raum 13 besteht, in dem sich das zu entgasende Medium befindet. Die Absaugöffnung bzw. der Einlaß 5 verbindet den Raum 13 mit dem Kanal 4, der wiederum mit dem Hohlraum 6 verbunden ist. Der Kanal 3 verbindet den Hohlraum 6 mit der Absaugleitung bzw. Sammelkanal 7. Der Körper 1 ist mit einer Antriebswelle 9 verbunden, sodaß die gesamte Vorrichtung in einem Gehäuse 12 in Richtung 20 rotiert, in das das Medium durch eine Öffnung 10 eintreten und aus dem das Medium über eine Öffnung 11 wieder austreten kann.

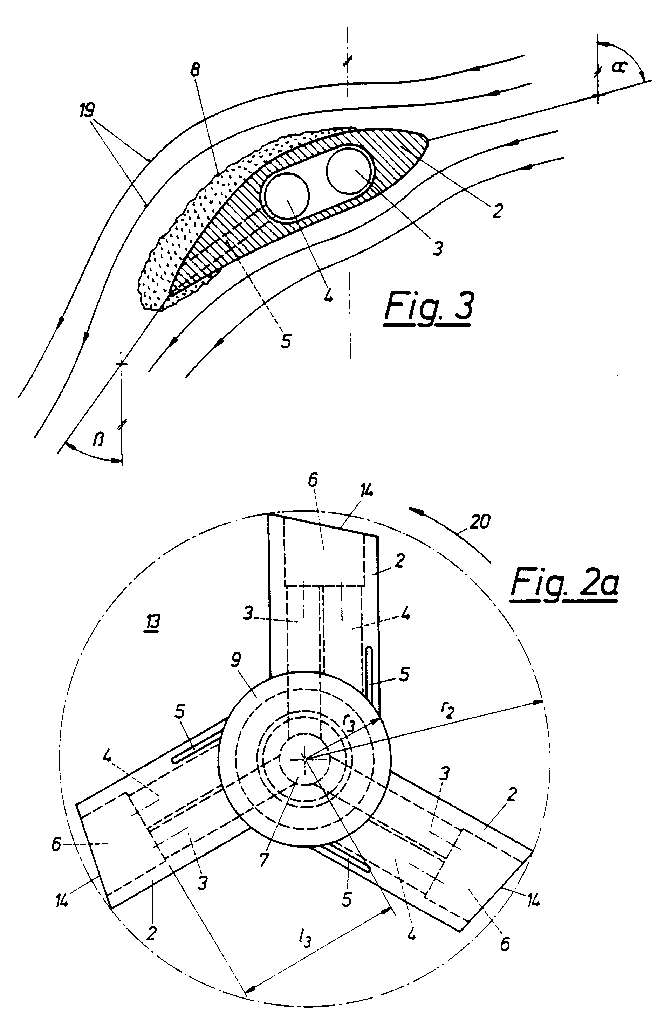

Fig. 2 zeigt eine Draufsicht auf die Vorrichtung, wobei gleiche Teile mit den entsprechenden Bezugszeichen gemäß Fig.1 gekennzeichnet wurden. Eine Ausführungsvariante mit drei Armen 2 ist in Fig. 2a in der Draufsicht dargestellt.

Schnitt A-A gemäß Fig. 1 ist in Fig. 3 dargestellt. Fig. 3a zeigt eine Draufsicht auf eine erfindungsgemäße Vorrichtung, wobei die Medienströme einerseits und wichtige Betriebs- und Vorrichtungsparameter andererseits eingetragen sind. Anhand dieser Figuren soll nun das Verfahren näher erläutert werden. Durch die Rotation der Vorrichtung entsteht eine Relativgeschwindigkeit R zwischen dem zu entgasenden Medium und den Armen 2. Das Medium strömt nun in Richtung 19 um die Arme 2, wobei an bestimmten Stellen der Arme 2 und in seiner Umgebung Unterdruckgebiete 8 mit einem Druck p₃ entstehen, in denen sich das Gas oder gasangereichertes Medium aufgrund geringerer spezifischer Dichte ansammelt. Die Relativgeschwindigkeit R wird so groß gewählt, daß ein genügend hoher Druckunterschied (p₁-p₃) entsteht, um eine Gasausscheidung hervorzurufen. Die Relativgeschwindigkeit R wird dabei durch die Drehzahl n, sowie durch die radialen Abmessungen (r₁,r₂,r₃,l₃,l₄) bestimmt, wobei die Drehzahl über einem Minimalwert von ca. 200 - 300 UpM liegt. Das in den Unterdruckgebieten 8 angesammelte Gas oder Dasgemisch gelangt in weiterer Folge über Einlaß 5 in den Kanal 4 und weiter in den Hohlraum 6. Der im Sammelkanal 7 herrschende Druck p₂ wird so eingestellt, daß er geringer ist, als der Druck p₃ der Unterdruckgebiete 8. In diesem Hohlraum 6 wird das Gas oder gasangereichertes Medium durch die dort herrschenden größeren Fliehkräfte effektiv von eventuell vorhandenen nicht gasförmigen Bestandteilen vollständig getrennt. Die abgetrennten Bestandteile werden durch das äußere Ende des Hohlraums 6 hindurch wieder in den Mediumstrom rückgeführt. Das gereinigte Gas gelangt über den Kanal 3 in den Sammelkanal 7. Bei entsprechender Auslegung der Vorrichtung und Wahl der Betriebsparameter (z.B.Drehzahl, Unterdruck) ist während des Betriebes keine Regelung erforderlich. Dadurch ergibt sich eine hohe Betriebssicherheit auch bei stark schwankenden Betriebszuständen sowie stark unterschiedlichen Zusammensetzungen der Flüssigkeits-Material-Gas-Mischung.

Der Einlaß 5 wird vorteilhaft so ausgebildet, daß er durch eine große radiale Erstreckung zu einem flächigen Gasentzug führt und dadurch die Weglänge kurz hält, die das Gas im Medium zurücklegen muß, um die Zone der Absaugung zu erreichen. Bei schwer zu entgasenden Medien kann die Weglänge durch Erhöhung der Drehzahl n entsprechend kurz gehalten werden, um dennoch eine effektive Entgasung zu erzielen.

Im Hohlraum 6 erfolgt die Abtrennung nicht gasförmiger Bestandteile aus dem Gas durch die unterschiedlichen Fliehkräfte der Komponenten, die durch die Dichteunterschiede hervorgerufen werden. Die Trennung vollzieht sich im Abstand 14 vom Rotationszentrum. Durch die erzwungene Verlagerung des Abscheidevorganges auf relativ große Entfernung 14 vom Rotationszentrum im Verhältnis zu den bekannten Verfahren mit Trombenbildung nahe des Rotationszentrums, wird eine äußerst gründliche Trennung der Komponenten bewirkt. Die aus dem Gas abgeschiedenen Bestandteile (feste und flüssige) werden über den nach außen offenen Hohlraum 6 dem Medium zurückgeführt. Das Gas wird dabei umgelenkt und über den Kanal 3 und den Sammelkanal 7 aus der Vorrichtung abgeführt. Für die Funktion der Vorrichtung mit Gasumlenkung ergibt sich eine Untergrenze der Abmessung r₂-l₃ des Hohlraumes 6. Diese bestimmt sich einerseits dadurch, daß durch die Druckdifferenz p₁-p₂ (Außendruck des Mediums - Druck im Sammelkanal 7) das Medium in den Hohlraum 6 eindringt. Durch die Rotation wird ein Gegendruck durch die Fliehkräfte erzeugt, bis eine Eindringtiefe des Mediums von r₁ - l₄ erreicht ist, in der sich ein Druckgleichgewicht einstellt. Andererseits ist die Querschnittsfläche des Hohlraums 6 zwischen l₄ und l₃ So groß zu halten, daß das Gas ungehindert vom Kanal 4 in den Kanal 3 gelangen kann.

Der Druckabbau vom Außenraum 13 über Hohlraum 6 in den Kanal 3 bzw. 7 kann durch eine geeignete Formgebung der Außenkontur 14 des Körpers 1 bzw. der Arme 2 unterstützt werden, wenn z.B. die Außenkontur 14 so ausgebildet wird, daß sich die radiale Erstreckung der Arme 2 in Richtung entgegen der Drehrichtung verringert, und dadurch in diesem Gebiet ein Unterdruckgebiet 8 erzeugt. Durch dieses Unterdruckgebiet 8 bedingt kann das Medium weniger weit in den Hohlraum 6 eindringen, als es z.B. bei zylindrischer Außenkontur 14 der Fall wäre.

Durch dieses Verfahren sind daher, auch bei schwankenden Betriebsbedingungen, keine regelungstechnischen Eingriffe erforderlich, vielmehr erfolgt durch den praktisch verzögerungsfreien Ablauf auch bei sehr instationären Betriebsverhältnissen eine effektive Entgasung des Mediums mit hoher Betriebszuverlässigkeit. Auch im Extremfall völliger Gasfreiheit des Mediums können bei entsprechender Auslegung der Abmessungen und Wahl der Betriebsparameter keine nichtgasförmigen Bestandteile aus dem System gelangen. In diesem Fall strömt das Medium über Einlaß 5 in den Kanal 4 und gelangt über Hohlraum 6 in den Außenraum 13 zurück.

Durch eine geeignete Formgebung der Arme 2 und Ausbildung der Winkel α bzw. β bezüglich der Rotationsachse wird das Medium weiterbefördert. Die Winkel α bzw. β werden abhängig von der Durchsatzmenge des zu entgasenden Mediums, der Drehzahl n, sowie nach dem gewünschten Förderverhalten gestaltet und können bei einer Ausführung in Art einer Laufschaufel auch über den Radius unterschiedlich sein. üblicherweise ist der Winkel α≧β.

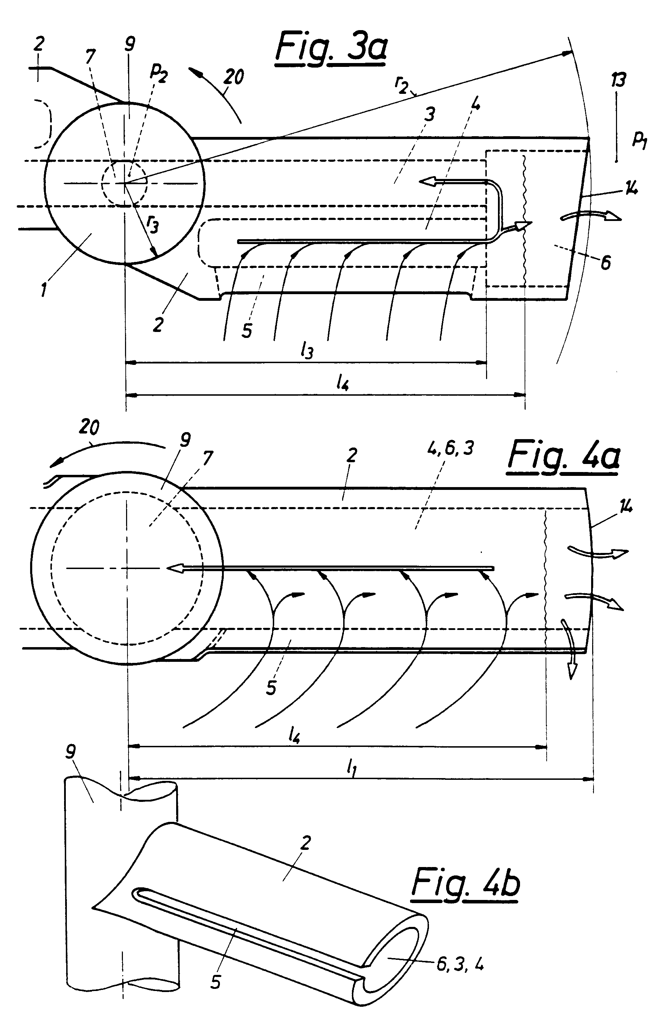

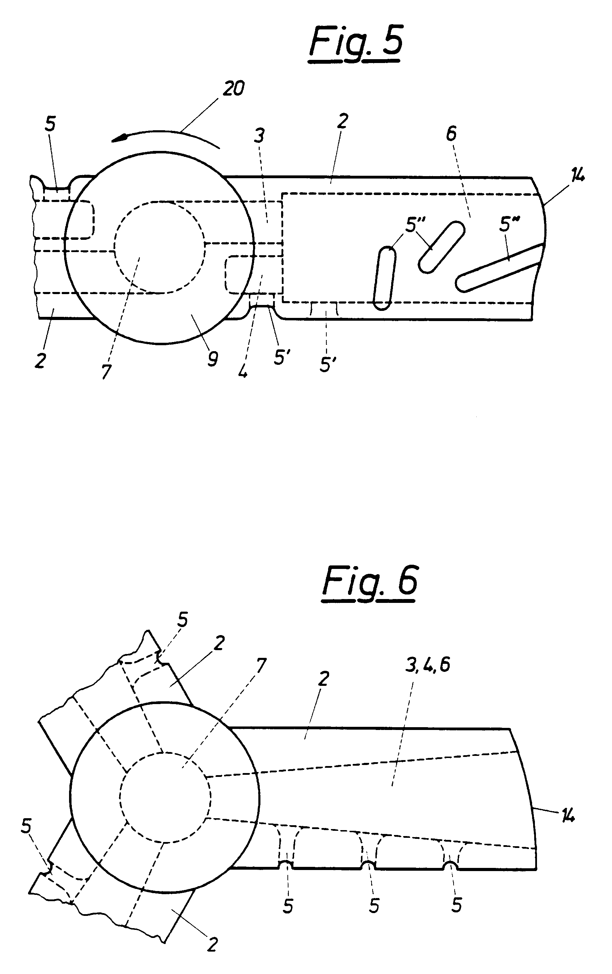

Der Querschnitt des Einlasses 5 bzw. sein Verlauf können verschieden ausgestaltet sein. So zeigen Fig.4a in Draufsicht bzw. Fig.4b in Seitenansicht einen schlitzartigen Einlaß 5, der sich über die gesamte Länge des Armes 2 erstreckt. In Fig. 4a sind wieder die einzelnen Medienströme (Flüssigkeits-Material-Gas-Mischung, Gas, nicht gasförmige Bestandteile) dargestellt. Fig. 5 zeigt beispielhaft verschiedenste Ausgestaltungen des Einlasses 5, wobei diese sowohl allein, als auch in Kombination eingesetzt werden können. Es sind hier dargestellt Bohrungen 5', die nahe der Welle 9 angeordnet sind und einerseits in einen Kanal 4 bzw. andererseits in den Hohlraum 6 münden. Weiters sind schlitzartige Öffnungen 5'' dargestellt, deren Richtung tangential zur Bewegungsrichtung bzw. in beliebigen Schräglagen dazu ausgeführt sind, wobei die Auswahl von den Stoffparametern des Mediums und den sonstigen Betriebsbedingungen abhängt. Wenn sich die nicht gasförmigen Bestandteile leicht abtrennen lassen, können die Kanäle 3 und 4 wie in Fig. 5 dargestellt kurz ausgeführt werden bzw. ein einziger Hohlraum kann die Funktion der Kanäle 3,4 sowie des Hohlraums 6 übernehmen (Fig. 6). Der Querschnitt der Einlässe 5, in Fig. 6 als Bohrungen ausgeführt, nimmt in Richtung des Hohlraumes 3,4,6 zu, wodurch eine Verstopfung mit mitgerissenen nicht gasförmigen Bestandteilen verhindert wird.

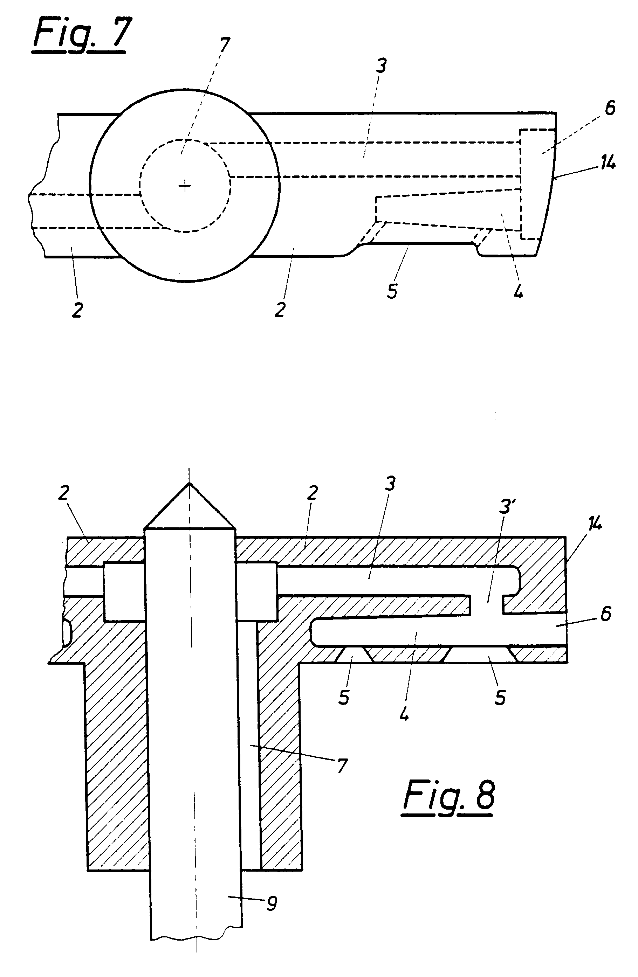

Bei kleinen abzuscheidenden Gasmengen kann der Hohlraum 6 auch sehr klein ausgeführt werden (Fig.7). Auch können die Kanäle 3 und 4 wie in Fig. 8 dargestellt direkt über eine Öffnung 3' miteinander verbunden sein. Fig. 8 zeigt weiters eine Variante der Ausführung des Sammelkanals 7, der hier als Ringspalt um die Welle 9 führt.

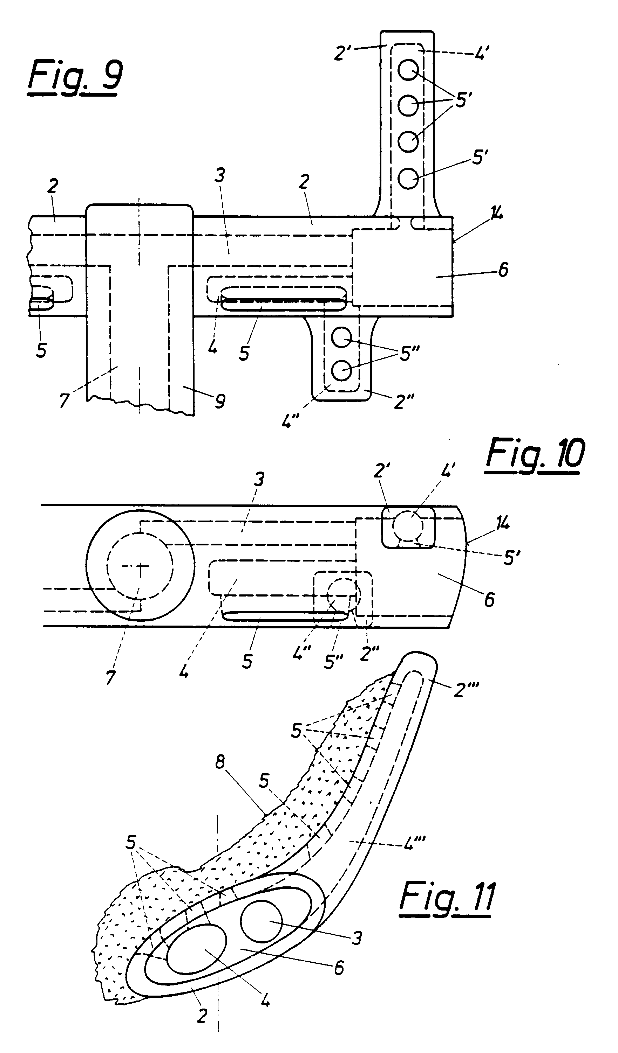

Fig. 9 und deren Draufsicht in Fig. 10 zeigen eine Ausführungsform bei schwer zu entgasenden Medien bzw. bei großen abzuführenden Gasmengen. Der Körper 1 weist hier zusätzliche Teile 2' bzw. 2'' auf, die Öffnungen 5' bzw. 5'' besitzen (hier als Bohrungen dargestellt, aber auch in Schlitzform möglich), welche über Kanäle 4' bzw. 4'', allenfalls über einen Kanal 4 mit dem Hohlraum 6 in Verbindung stehen.

Fig. 11 zeigt eine weitere Ausführungsform der Vorrichtung mit einem zusätzlichen Teil 2''' und einem Kanal 4''', wobei über Einlässe 5 aus einem Unterdruckbereich 8 abgesaugt wird.

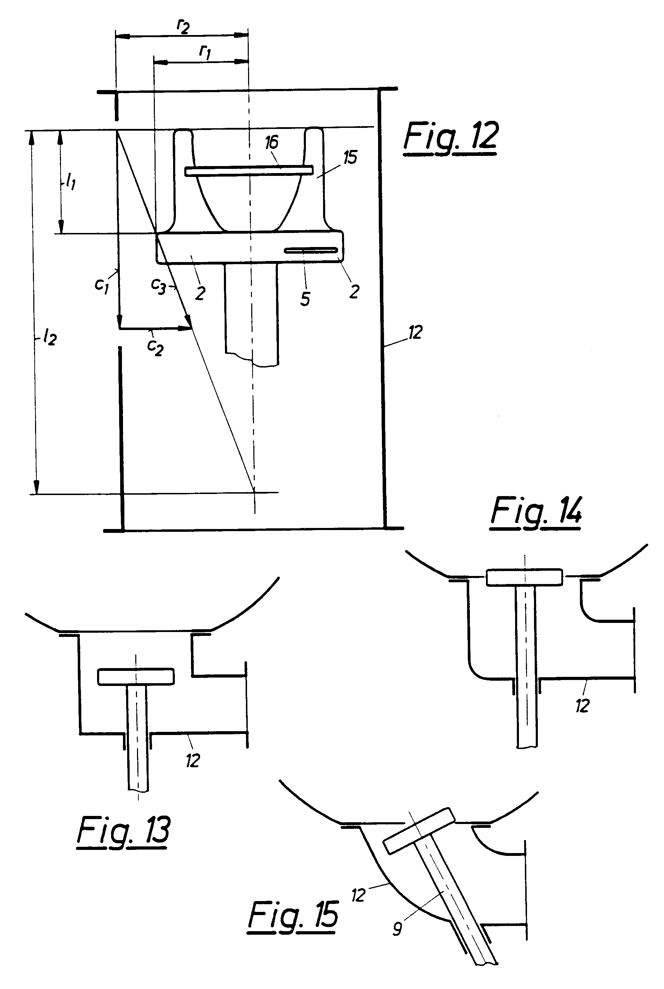

In Fig. 12 ist eine Variante der erfindungsgemäßen Vorrichtung dargestellt, die das erfindungsgemäße Verfahren mit dem bekannten Verfahren der Zentrifugenwirkung verbindet. Es sind hier Elemente 15 vorgesehen, die imstande sind, das Medium im äußeren Randbereich bis ca. r₁ nach dem Zentrifugenprinzip zu entgasen. Zur Versteifung können entsprechende Teile 16 vorgesehen sein. Der Vorteil dieser Ausführung besteht darin, daß gegenüber den bekannten Vorrichtungen die Baulänge wesentlich verkürzt ist und innerhalb des Bereiches von r₁ keine Gasausscheidung stattfinden muß. Die vom auszuscheidenden Gas zurückzulegende Weglänge wird daher wesentlich verkürzt. Es entfallen auch die Elemente zur Stabilisierung der Trombe sowie die Notwendigkeit einer aufwendigen Regelung. Es sind hier auch die einzelnen Gasgeschwindigkeitskomponenten dargestellt, und zwar in axialer Richtung die gleiche Geschwindigkeit wie das Medium c₁, in radialer Richtung die Komponente c₂, die vom zu entgasenden Medium und den Betriebsparametern abhängig ist und die daraus resultierende Geschwindigkeitskomponente c₃ in Richtung des Rotationszentrums. Durch den flächigen Gasentzug innerhalb des Radius r₁ wird die sonst nötige Länge einer Zentrifuge von l₂ auf l₁ verkürzt. Da keine trombenförmige Gasausscheidung in der Nähe des Rotationszentrums erzeugt werden muß, sind auch keine Elemente zu deren Stabilisierung notwendig. Durch die effektive Trennfunktion sind auch die bisher verwendeten Siebe o.ä. nicht nötig.

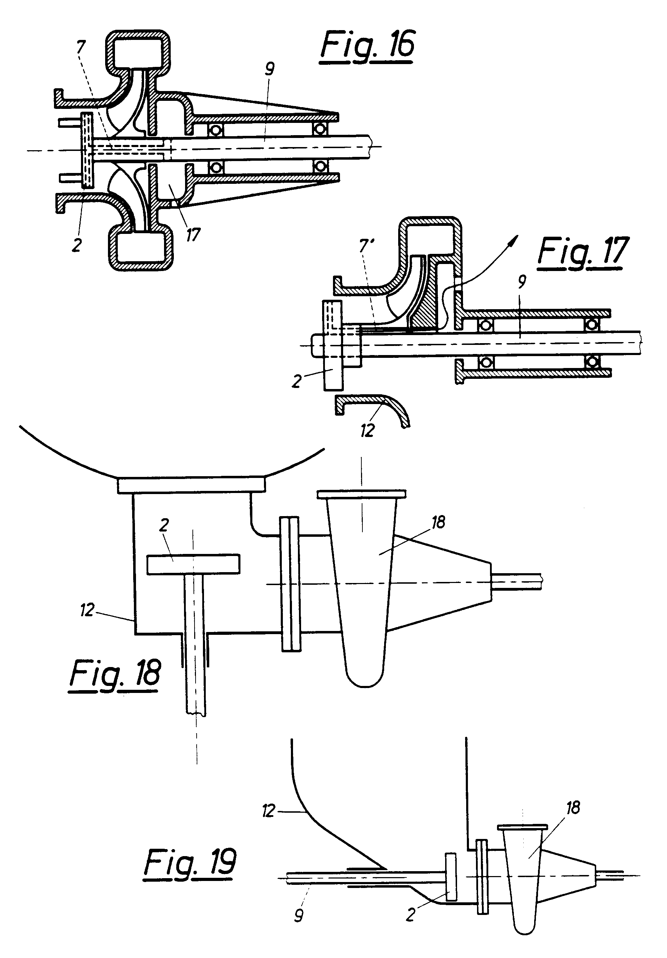

Fig. 13 bis Fig. 15 zeigen verschiedene Anordnungen der erfindungsgemäßen Vorrichtung in einem Gehäuse 12, das üblicherweise unterhalb eines zu entleerenden Behälters angebracht ist. Fig. 13 unterscheidet sich von Fig.14 darin, daß in Fig. 13 die Vorrichtung vollständig im Gehäuse 12 enthalten ist, während die Vorrichtung in Fig. 14 zumindest zum Teil in den oberhalb angebrachten Behälter reicht.

Fig. 15 zeigt die Anordnung der Vorrichtung im Gehäuse 12 mit schrägstehender Welle 9.

In Fig. 16 und Fig. 17 ist die Vorrichtung direkt mit der Welle 9 einer nachfolgenden Pumpe verbunden, wobei in Fig. 16 der Sammelkanal 7 zentral in der Welle 9 vorgesehen ist und über eine Ringkammer 17 abgesaugt wird. In Fig. 17 wird hingegen über einen Ringspalt 7' abgesaugt.

Fig. 18 und Fig. 19 zeigen Anordnungen der Vorrichtung in einem Gehäuse 12, an das die Pumpe 18 direkt angeschlossen ist.

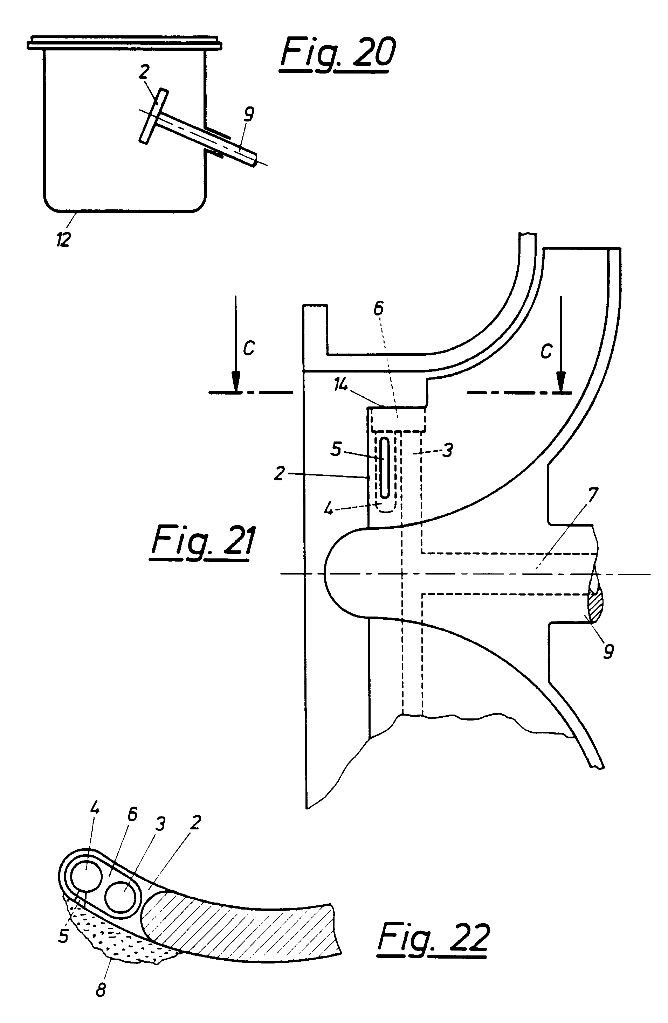

Soll eine Flüssigkeits-Material-Gas-Mischung diskontinuierlich entgast werden, wird eine Anordnung gemäß Fig. 20 verwendet.

Fig. 21 stellt eine Ausführung dar, bei der die Vorrichtung direkt in die Pumpenlaufradschaufel integriert ist. Fig. 22 zeigt dazu den Schnitt C-C gemäß Fig. 21.

Grundsätzlich kann der Körper 1 der Vorrichtung auch so gestaltet werden, daß er eine fördernde Wirkung auf das Medium erzielt.

Die dargestellten Ausführungen der Erfindung sind nur beispielhaft und können im Rahmen der Ansprüche mit fachmännischem Wissen entsprechend variiert werden.

## Patentansprüche

1. Verfahren zum Abtrennen von gasförmigen Bestandteilen aus fließfähigen Medien, insbesondere Feststoff-Flüssigkeit-Mischungen, durch Relativbewegung zwischen dem Medium und einem darin befindlichen Körper (1), insbesondere Rotationskörper, **dadurch gekennzeichnet, daß** die Feststoff-Flüssigkeit-Mischung zuerst an der Oberfläche dieses Körpers (1), der Flügelprofil aufweist, entlang bewegt und die Strömung anschließend zum Ablösen bzw. Abreißen von der Körperoberfläche gebracht wird wodurch Unterdruckzonen (8) gebildet werden und daß das sich in diesen Unterdruckzonen (8) ansammelnde an Gas angereicherte Medium durch in diesem Bereich angeordnete Öffnungen (5) in das Körperinnere geleitet und daraus abgeleitet und das im körperinneren entgaste Medium im Bereich des äußeren Umfanges des Körpers in das den Körper umgebende Medium rückgeführt wird.

2. Verfahren nach Anspruch 1, **dadurch gekennzeichnet, daß** zusammen mit angesammeltem Gas in das Körperinnere eintretendes an Gas angereichertes Medium im Körperinneren einer weiteren Entgasung durch Fliehkraftwirkung unterworfen wird.

3. Verfahren nach einem der Ansprüche 1 bis 2, **dadurch gekennzeichnet, daß** die Relativbewegung durch Drehen des Körpers (1) erzeugt wird.

4. Verfahren nach einem der Ansprüche 1 bis 2, **dadurch gekennzeichnet, daß** die Relativbewegung durch Drehen des Körpers (1) und Bewegen des Mediums erzeugt wird.

5. Verfahren nach einem der Ansprüche 1 bis 4, **dadurch gekennzeichnet, daß** die Relativgeschwindigkeit durch Veränderung der Bewegungsgeschwindigkeit des Körpers (1) und/oder des Mediums eingestellt wird.

6. Verfahren nach Anspruch 5, **dadurch gekennzeichnet, daß** die Relativgeschwindigkeit in Abhängigkeit von den Zustandsgrößen des zu entgasenden Mediums eingestellt wird.

7. Verfahren nach einem der Ansprüche 1 bis 8, **dadurch gekennzeichnet, daß** die Strömungsrichtung von Gas im Körperinneren durch Umlenken verändert wird.

8. Verfahren nach einem der Ansprüche 1 bis 9, **dadurch gekennzeichnet, daß** das vom Medium abgetrennte Gas unter Anwendung von Unterdruck aus dem Körperinneren abgeleitet wird.

9. Verfahren nach Anspruch 8, **dadurch gekennzeichnet, daß** der angewendete Unterdruck in Abhängigkeit von den Zustandsgrößen des zu entgasenden Mediums eingestellt wird.

10. Vorrichtung zum Abtrennen von gasförmigen Bestandteilen aus fließfähigen Medien, die zur Erzeugung einer Relativbewegung zwischen den Medien und einem in diesen Medien angeordneten Körper (1) eingerichtet ist, der insbesondere rotierbar vorgesehen ist, **dadurch gekennzeichnet, daß** der Körper (1) Flügelprofil aufweist, das bei dieser Relativbewegung Unterdruckzonen (8) an der Körperoberfläche hervorruft und der Körper (1) im Bereich der Unterdruckzonen (8) mindestens einen Einlaß (5) aufweist, der mit einer im Körperinneren verlaufenden Gasabführung zum Abtransport von abgetrenntem Gas verbunden ist sowie die Gasabführung mindestens einen den Körper (1) durchsetzenden und im Bereich des äußeren Umfanges dieses Körpers (1) offenen Kanal (4) aufweist.

11. Vorrichtung nach Anspruch 10, **dadurch gekennzeichnet, daß** der Körper (1) rotierbar vorgesehen ist.

12. Vorrichtung nach einem der Ansprüche 10 oder 11, **dadurch gekennzeichnet, daß** der Körper (1) als Drehkörper ausgebildet ist

13. Vorrichtung nach einem der Ansprüche 10 bis 12, **dadurch gekennzeichnet, daß** der im Bereich des äußeren Umfanges des Körpers (1) offene Kanal (4) in einen erweiterten Hohlraum (6) mündet.

14. Vorrichtung nach einem der Ansprüche 10 bis 13, **dadurch gekennzeichnet, daß** der im Bereich des äußeren Umfangs des Körpers (1) offene Kanal (4), gegebenenfalls über den erweiterten Hohlraum (6), mit einem weiteren Kanal (3) verbunden ist.

15. Vorrichtung nach einem der Ansprüche 10 bis 14, **dadurch gekennzeichnet, daß** der Körper (1) mehrere Arme (2) aufweist.

16. Vorrichtung nach Anspruch 15, **dadurch gekennzeichnet, daß** mehrere Arme (2) in einer Ebene angeordnet sind.

17. Vorrichtung nach Anspruch 15, **dadurch gekennzeichnet, daß** die Arme (2) in mindestens zwei Ebenen in bezug auf die Rotationsachse angeordnet sind.

18. Vorrichtung nach einem der Ansprüche 10 bis 17, **dadurch gekennzeichnet, daß** die Gasabführung in einen Sammelkanal (7) mündet.

19. Vorrichtung nach einem der Ansprüche 10 bis 18, **dadurch gekennzeichnet, daß** die Gasabführung mit einer Absaugvorrichtung verbunden ist.

20. Vorrichtung nach einem der Ansprüche 10 bis 19, **dadurch gekennzeichnet, daß** der Körper (1) bzw. die Arme (2) mit einer Antriebsvorrichtung (9) verbunden ist bzw. sind.

21. Vorrichtung nach einem der Ansprüche 18 bis 20, **dadurch gekennzeichnet, daß** der Sammelkanal (7) in der Antriebswelle (9) angeordnet ist.

22. Vorrichtung nach einem der Ansprüche 18 bis 20, **dadurch gekennzeichnet, daß** der Sammelkanal (7) zwischen Nabe und Welle angeordnet ist.

23. Vorrichtung nach einem der Ansprüche 10 bis 22, **dadurch gekennzeichnet, daß** mindestens ein Einlaß (5) kreisförmig ausgebildet ist.

24. Vorrichtung nach Anspruch 23, **dadurch gekennzeichnet, daß** mindestens ein Einlaß (5) als Bohrung ausgebildet ist.

25. Vorrichtung nach Anspruch 24, **dadurch gekennzeichnet, daß** mehrere Bohrungen mindestens im wesentlichen in radialer Richtung nebeneinander am Körper (1) angeordnet sind.

26. Vorrichtung nach Anspruch 24, **dadurch gekennzeichnet, daß** mehrere Bohrungen mindestens im wesentlichen parallel zur Rotationsachse nebeneinander am Körper (1) angeordnet sind.

27. Vorrichtung nach einem der Ansprüche 10 bis 26, **dadurch gekennzeichnet, daß** mindestens ein Einlaß (5) schlitzförmig ausgebildet ist.

28. Vorrichtung nach Anspruch 27, **dadurch gekennzeichnet, daß** mindestens ein schlitzförmiger Einlaß (5) in radialer Richtung ausgerichtet ist.

29. Vorrichtung nach einem der Ansprüche 10 bis 28, **dadurch gekennzeichnet, daß** der mindestens eine Einlaß (5) einen sich in Richtung zum Körperinneren erweiternden Querschnitt aufweist

30. Vorrichtung nach Anspruch 29, **dadurch gekennzeichnet, daß** sich der Querschnitt kontinuierlich erweitert.

31. Vorrichtung nach einem der Ansprüche 10 bis 30, **dadurch gekennzeichnet, daß** im Bereich des äußeren Umfanges mindestens ein zusätzliches Profil mit mindestens im wesentlichen zur Rotationsachse paralleler Ausrichtung vorgesehen ist.

32. Anlage zum Abtrennen von gasförmigen Bestandteilen aus fließfähigen Medien, insbesondere Feststoff-Flüssigkeit-Mischungen, durch Relativbewegung zwischen dem Medium und einem darin befindlichen, insbesondere rotierbaren, Körper, **dadurch gekennzeichnet, daß** eine Vorrichtung vorgesehen ist, die einen Körper (1) mit Flügelprofil aufweist, das bei dieser Relativbewegung Unterdruckzonen (8) an der Körperoberfläche hervorruft und der Körper (1) im Bereich der Unterdruckzonen (8) mindestens einen Einlaß (5) aufweist, der mit einer im Körperinneren verlaufenden Gasabführung zum Abtransport von abgetrenntem Gas verbunden ist sowie die Gasabführung mindestens einen den Körper (1) durchsetzenden und im Bereich des äußeren Umfanges dieses Körpers (1) offenen Kanal (4) aufweist und die Vorrichtung in einem Behälter (12) oder in einem Kanal, insbesondere Rohr, Rohrbogen bzw. Rohrkrümmer, angeordnet ist.

33. Anlage nach Anspruch 32, **dadurch gekennzeichnet, daß** die Vorrichtung schräg im Behälter (12) bzw. Kanal angeordnet ist.

34. Anlage nach Anspruch 32 oder 33, **dadurch gekennzeichnet, daß** die Vorrichtung exzentrisch im Behälter (12) bzw. Kanal angeordnet ist.

35. Anlage nach einem der Ansprüche 32 bis 34, **dadurch gekennzeichnet, daß** der Vorrichtung ein Behälter vorgeschaltet ist und die Vorrichtung mindestens teilweise aus dem Behälter (12) bzw. Kanal in den Behälter hineinragt.

36. Anlage nach einem der Ansprüche 32 bis 35, **dadurch gekennzeichnet, daß** die Vorrichtung einer Pumpe (18) vorgeschaltet ist.

37. Anlage nach Anspruch 36, **dadurch gekennzeichnet, daß** die Vorrichtung mit der Welle der Pumpe (18) direkt verbunden ist.

38. Anlage nach Anspruch 37, **dadurch gekennzeichnet, daß** die Vorrichtung als Pumpenlaufradschaufel ausgebildet ist.

## Claims

1. A process for separating gaseous components from pourable media, in particular solid-liquid-suspensions, by relative movement between the medium and a body (1) situated therein, in particular a rotary body, characterised in that the solid-liquid-mixture first moves along the surface of this body having the configuration of a vane and the flow is subsequently caused to lift off or rip off the surface of the body, thus forming underpressure zones, and in that the gas-enriched medium accumulating in these underpressure zones is directed into the interior of the body through opening arranged in this reagion and directed out of it and the medium degassed in the interior of the body is recycled into the medium surrounding the body in the region of the outer periphery of the body.

2. The process according to claim 1, characterised in that medium enriched with gas, entering the interior of the body together with accumulated gas, is subjected to further degassing by centrifugal force inside the body.

3. The process according to any of claims 1 or 2, characterised in that the relative movement is achieved by rotating the body.

4. The process according to any of claims 1 or 2, characterised in that the relative movement is achieved by rotation of the body and movement of the medium.

5. The process according to any of claims 1 to 4, characterised in that the relative speed is adjusted by changing the speed of movement of the body and/or the medium.

6. The process according to claim 5, characterised in that the relative speed is adjusted in dependance on the state parameters of the medium to be degassed.

7. The process according to any of claims 1 to 6, characterised in that the direction of flow of gas inside the body is changed by deviating it.

8. The process according to any of claims 1 to 7, characterised in that the gas separated from the medium is evacuated from the interior of the body by applying underpressure.

9. The process according to claim 8, characterised in that the overpressure applied is adjusted in dependance on the state parameters of the medium to be degassed.

10. A device for separating gaseous components from pourable media adapted for the generation of relative movement between the media and a body (1) arranged in these media, which body is in particular provided rotatably, characterised in that the body (1) has the configuration of a vane, which causes underpressure zones (8) on the surface of the body in the course of this relative movement, and in that the body (1) has at least one inlet (5) in the region of the underpressure zones (8), which inlet communicates with a gas discharge running inside the body for transporting off separated gas and the gas discharge has at least one channel (4) going through the body (1) and open in the region of the outer radial periphery.

11. The device according to claim 10, characterised in that the body (1) is provided rotatably.

12. The device according any of claims 10 or 11, characterised in that the body (1) is formed as a rotary body.

13. The device according to any of claims 10 to 12, characterised in that the channel (4) open in the region of the radially outer circumference discharges into an enlarged cavity (6).

14. The device according to any of claims 10 to 13, characterised in that the channel (4) open in the region of the radially outer circumference of the body (1) communicates with a further channel (3), optionally via the enlarged cavity (6).

15. The device according to any of claims 10 to 14, characterised in that the body (1) has several arms (2).

16. The device according to claim 15, characterised in that several arms (2) are arranged in one plane.

17. The device according to claim 15, characterised in that the arms (2) are arranged in at least two planes with respect to the rotational axis.

18. The device according to any of claims 10 to 17, characterised in that the gas discharge opens into a collecting channel (7).

19. The device according to any of claims 10 to 18, characterised in that the gas discharge communicates with a suction device.

20. The device according to any of claims 10 to 19, characterised in that the body (1) and the arms (2), respectively, is/are connected to a drive device (9).

21. The device according to any of claims 18 to 20, characterised in that the collecting channel (7) is arranged in the drive shaft (9).

22. The device according to any of claims 18 to 20, characterised in that the collecting channel (7) is arranged between hub and shaft.

23. The device according to any of claims 10 to 22, characterised in that at least one inlet (5) is of circular configuration.

24. The device according to claim 23, characterised in that at least one inlet (5) is formed as a bore.

25. The device according to claim 24, characterised in that several bores are, at least substantially in a radial direction, arranged adjacent to each other on the body (1).

26. The device according to claim 24, characterised in that several bores are arranged adjacent to each other on the body (1), at least substantially in parallel to the rotational axis.

27. The device according to any of claims 10 to 26, characterised in that at least one inlet (5) takes the form of a slot.

28. The device according to claim 27, characterised in that at least one slot-like inlet (5) is oriented in the radial direction.

29. The device according to any of claims 10 to 28, characterised in that the at least one inlet (5) has a cross section widening in the direction towards the interior of the body.

30. The device according to claim 29, characterised in that the cross section widens continuously.

31. The device according to any of claims 10 to 30, characterised in that at least one additional profile being oriented at least substantially in parallel to the rotational axis is provided in the region of the outer radial periphery.

32. An installation for separating gaseous components from pourable meida, in partricular solid-liquid-mixtures, by relative movement between the medium and an, in particular rotatable, body positioned therein, characterised in that provision is made for a device having a body (1) with vane-like configuration, this body having at least one channel (4) running through the body (1) and open in the region of the outer periphery of this body (1) and the device is arranged in a container (12) or in a channel, in particular a pipe, a bent and a curved pipe, respectively.

33. The installation according to claim 32, characterised in that the device is arranged in an oblique position in the housing (12) and channel, respectively.

34. The installation according to claim 32 or 33, characterised in that the device is arranged in an eccentric position in the container (12) and channel, respectively.

35. The installation according to any of claims 32 to 34, characterised in that the device is arranged downstream of a container and protrudes at least partly from the container (12) and channel, respectively, into the container.

36. The installation according to any of claims 32 to 35, characterised in that the device is arranged upstream of a pump (18).

37. The installation according to claim 36, characterised in that the device is directly connected to the shaft of the pump (18).

38. The installation according to claim 37, characterised in that the device takes the form of a pump rotor vane.

## Revendications

1. Procédé pour séparer des composants gazeux des milieux coulants surtout des mélanges solides/liquides, par le mouvement relatif entre le milieu et un corps (1) s'y trouvant, surtout un corps rotatif, caractérisé en ce que le mélange solide/liquide est d'abord mouvementé le long de la surface de ce corps (1), au profit d'aile, et que puis, le flux est amené à se détacher ou bien se rompre de la surface du corps, formant ainsi des zones de dépression (8), et que le milieu enrichi de gaz qui s'amasse dans ces zones de dépression (8) est mené à travers des trous (5) disposés dans cette section vers l'intérieur du corps et que le milieu dégazé à l'intérieur du corps est retourné au milieu qui se trouve autour du corps à la section du périmètre extérieur du corps

2. Procédé selon la revendication 1, caractérisé en ce qu'ensemble avec le gaz ramassé, le milieu enrichi de gaz et entrant à l'intérieur du corps est soumis à un dégazage supplémentaire à l'intérieur du corps par la force centrifuge.

3. Procédé selon une des revendications 1 à 2, caractérisé en ce que le mouvement relatif est généré par la rotation du corps (1).

4. Procédé selon une des revendications 1 à 2, caractérisé en ce que le mouvement relatif est généré par la rotation du corps (1) et par le mouvement du milieu.

5. Procédé selon une des revendications 1 à 4, caractérisé en ce que la vitesse relative est ajustée par le changement de la vitesse du mouvement du corps (1) et/ou du milieu.

6. Procédé selon la revendication 5, caractérisé en ce que la vitesse relative est ajustée en fonction des variables du milieu à dégazer.

7. Procédé selon une des revendications 1 à 8, caractérisé en ce que la direction de flux du gaz à l'intérieur du corps est modifié par un détournement.

8. Procédé selon une des revendications 1 à 9, caractérisé en ce que le gaz séparé du milieu est enlevé de l'intérieur du corps par application de dépression.

9. Procédé selon la revendication 8, caractérisé en ce que la dépression appliquée est ajustée en fonction des variables du milieu à dégazer.

10. Dispositif pour séparer les composants gazeux des milieux coulants, équipé pour produire un mouvement relatif entre les milieux et un corps (1) disposé dans ces milieux, qui est surtout prévu rotatif, caractérisé en ce que le corps (1) a un profil d'aile qui à ce mouvement relatif génère des zones de dépression (8) à la surface de ce corps et que le corps (1) a au moins une entrée (5) dans la section de ces zones de dépression (8), cette entrée étant reliée à une décharge de gaz à l'intérieur du corps pour le transport du gaz séparé, et que la décharge du gaz a au moins un conduit (4) traversant le corps (1), ce conduit (4) étant ouvert dans la section du périmètre extérieur du corps.

11. Dispositif selon la revendication 10 caractérisé en ce que le corps (1) est prévu rotatif.

12. Dispositif selon une des revendications 10 ou 11 caractérisé en ce que le corps (1) a la forme d'un corps rotatif.

13. Dispositif selon une des revendications 10 à 12, caractérisé en ce que le conduit (4) ouvert dans la section du périmètre extérieur du corps (1) débouche dans une cavité étendue (6).

14. Dispositif selon une des revendications 10 à 13 caractérisé en ce que le conduit (4) ouvert dans la section du périmètre extérieur du corps (1) est relié à un autre conduit (3) éventuellement par l'intermédiaire de la cavité étendue (6).

15. Dispositif selon une des revendications 10 à 14 caractérisé en ce que le corps (1) a plusieurs bras (2).

16. Dispositif selon la revendication 15 caractérisé en ce que plusieurs bras (2) sont disposés sur le même niveau.

17. Dispositif selon la revendication 15 caractérisé en ce que les bras (2) sont disposés sur au moins deux niveaux par rapport à l'axe de rotation.

18. Dispositif selon une des revendications 10 à 17, caractérisé en ce que la décharge du gaz débouche dans un collecteur (7).

19. Dispositif selon une des revendications 10 à 18, caractérisé en ce que la décharge du gaz est reliée à un dispositif d'aspiration.

20. Dispositif selon une des revendications 10 à 19, caractérisé en ce que le corps (1) respectivement les bras (2) est (sont) relié(s) à un dispositif de commande (9).

21. Dispositif selon une des revendication s 18 à 20, caractérisé en ce que le collecteur (7) est disposé dans l'arbre de commande (9).

22. Dispositif selon une des revendications 18 à 20, caractérisé en ce que le collecteur (7) est disposé entre le noyau et l'arbre.

23. Dispositif selon une des revendications 10 à 22, caractérisé en ce qu'au moins une des entrées (5) a une forme circulaire.

24. Dispositif selon la revendication 23, caractérisé en ce qu'au moins une des entrées (5) est exécutée en tant que forure.

25. Dispositif selon la revendication 24, caractérisé en ce que plusieurs forures sont au moins essentiellement disposées sur le corps (1) l'une à côté de l'autre au sens radial.

26. Dispositif selon la revendication 24, caractérisé en ce que plusieurs forures sont au moins essentiellement disposées sur le corps (1) l'une à côté de l'autre au sens parallèle à l'axe de rotation.

27. Dispositif selon une des revendications 10 à 26, caractérisé en ce qu'au moins une des entrées (5) a la forme d'une fente.

28. Dispositif selon la revendication 27, caractérisé en ce qu'au moins une des entrées (5) en forme de fente est orientée au sens radial.

29. Dispositif selon une des revendications 10 à 28, caractérisé en ce qu'au moins la dite entrée (5) a une coupe s'agrandissant vers l'intérieur du corps.

30. Dispositif selon la revendication 29, caractérisé en ce que la coupe s'agrandit en continu.

31. Dispositif selon une des revendications 10 à 30, caractérisé en ce qu'à la section du périmètre extérieur, au moins un profil supplémentaire dont la disposition est au moins essentiellement parallèle à l'axe de rotation est prévu.

32. Installation pour séparer les composants gazeux des milieux coulants, surtout des mélanges solides/liquides, par un mouvement relatif entre le milieu et un corps (1) disposé dans ce milieu, qui est surtout rotatif, caractérisé en ce qu'un dispositif est prévu disposant d'un corps (1) au profil d'aile qui à ce mouvement relatif génère des zones de dépression (8) à la surface de ce corps et que le corps (1) a au moins une entrée (5) dans la section des zones de dépression (8), cette entrée étant reliée à une décharge de gaz à l'intérieur du corps pour le transport du gaz séparé, et que la décharge du gaz a au moins un conduit (4) traversant le corps (1), ce conduit (4) étant ouvert dans la section du périmètre extérieur du corps, et que le dispositif est disposé dans un bac (12) ou un conduit, surtout un tuyau, une courbe ou un coude.

33. Installation selon la revendication 32, caractérisée en ce que le dispositif est disposé dans le bac (12) ou conduit en biais.

34. Installation selon les revendications 32 ou 33, caractérisée en ce que le dispositif est disposé dans le bac (12) ou le conduit de façon excentrique.

35. Installation selon une des revendications 32 à 34, caractérisée en ce qu'un bac se trouve avant le dispositif et que le dispositif avance du bac (12) ou du conduit dans le bac, au moins en partie.

36. Installation selon une des revendications 32 à 35, caractérisée en ce que le dispositif précède une pompe (18).

37. Installation selon la revendication 36, caractérisée en ce que le dispositif est directement lié à l'arbre de la pompe (18).

38. Installation selon la revendication 37, caractérisée en ce que le dispositif a la forme d'une ailette de roue de pompe.
